Europäisches Patentamt

European Patent Office

Office européen des brevets

(19)

(11) Numéro de publication : **0 067 731**
**B1**

# (12) FASCICULE DE BREVET EUROPÉEN

(45) Date de publication du fascicule du brevet :
24.04.85

(21) Numéro de dépôt : **82400858.5**

(22) Date de dépôt : **10.05.82**

(51) Int. Cl.⁴ : **F 41 F  5/02, B 64 D   1/00**

(54) **Dispositif de fixation pour modules embarqués, notamment pour modules lance-éclairants.**

(30) Priorité : **03.06.81 FR 8110974**

(43) Date de publication de la demande :
**22.12.82 Bulletin 82/51**

(45) Mention de la délivrance du brevet :
**24.04.85 Bulletin 85/17**

(84) Etats contractants désignés :
**AT BE CH DE FR GB IT LI LU NL SE**

(56) Documents cités :
**FR-A- 1 001 802**
**FR-A- 2 036 520**
**US-A- 3 040 629**
**US-A- 3 243 153**

(73) Titulaire : **SOCIETE E. LACROIX - TOUS ARTIFICES**
**Route de Toulouse**
**F-31600 Muret (FR)**

(72) Inventeur : **Billard, Alain André Aristide**
**65, avenue Saint Germier**
**F-31600 Muret (FR)**
Inventeur : **Santalucia, André Robert Gino**
**Route de Saint Lys**
**F-31490 Leguevin (FR)**
Inventeur : **Breseghelio, Christian**
**Route de Saint Prim**
**F-09700 Saverdun (FR)**

(74) Mandataire : **Corre, Jacques Denis Paul et ai**
**Cabinet Regimbeau 26, Avenue Kléber**
**F-75116 Paris (FR)**

Jouve, 18, rue St-Denis, 75001 Paris, France

## Description

L'invention concerne les équipements embarqués lanceurs d'engins et/ou de contre-mesures, en particulier pour aéronefs.

De tels équipements doivent répondre à de nombreux critères tels que : compacité (maître-couple et volume), versatilité sans modification de l'interface à l'emport de différents types de charge, ergonomie-facilité de pose et dépose-, sécurité, fiabilité. Ces deux derniers critères sont difficiles à satisfaire dans les ambiances très variables existant sur un aéronef : on notera en particulier les variations de température, de pression, et les conditions de vibration.

La mise en place sous un avion des différents types de charges utiles pose des problèmes délicats :
— choix des emplacements difficile, compte tenu du peu d'espace libre sous l'avion, des contraintes aérodynamiques à l'extérieur, ainsi que des incompatibilités à respecter entre divers équipements ou éléments.

De plus, l'intégration des commandes à partir du poste de pilotage doit pouvoir se faire de façon fiable, et aussi sélective en même temps que versatile, quel que soit le type de charge concerné.

La présente invention vient apporter des solutions à ces différents problèmes.

Pour résoudre ces problèmes, il est proposé d'utiliser des modules lanceurs standard, et un dispositif de fixation d'un type comportant une pluralité d'organes de prise mâles répartis sur une paroi rectiligne du module et une règle-support à fixer sur l'aéronef, munie de moyens de prise femelle homologues.

Un tel type de dispositif de fixation est connu du fait US-A-3 040 529, qui décrit un dispositif destiné à porter un missile sous une aile d'avion et comportant à cet effet deux organes de prise mâles montés sur le missile et une rainure rectiligne continue aménagée dans la règle pour recevoir ces organes mâles en les retenant à l'encontre de tout mouvement transversal par rapport à elle mais en les laissant par contre libres de coulisser le long d'elle pour assurer un guidage du missile lors de son lancement ; des moyens de verrouillage s'opposent à un tel coulissement tant que le missile doit être retenu sous l'avion.

Le dispositif de fixation selon l'invention se caractérise quant à lui par le fait que les moyens de prise femelles comportent une pluralité d'organes de prise femelles répartis le long de la règle-support et coopérant à la façon de queues d'arondes avec les organes de prise mâles, la règle-support contenant des échancrures d'introduction des organes de prise mâles adjacentes à ses organes de prise femelles, et en ce que, pour chaque emplacement de module, les organes de prise femelles et mâles sont écartés les uns des autres selon une même progression géométrique le long de la règle-support et de la paroi rectiligne du module.

On obtient ainsi une fixation sûre, et pratiquement insensible aux vibrations dont le mode d'écartement mutuel des organes de prise le long de la règle-support et de la paroi rectiligne du module évite la propagation.

Très avantageusement, il est prévu par ailleurs un moyen mécanique réversible, propre à assurer une translation relative entre la règle-support et le module, de la position « module engagé » à la position « module verrouillé ».

Dans un mode de réalisation particulier, le moyen mécanique comprend, au niveau du module, un levier mobile en rotation sur 360° entre deux butées franches, couplé à un galet contenant une came spirale incorporée, ainsi qu'un téton solidaire de la règle-support en position prédéterminée, et propre à coopérer avec la came pour assurer ladite translation.

De préférence, le levier est escamotable dans le module à l'une de ses extrémités, la position d'escamotage correspondant au verrouillage. A l'extrémité opposée du module il est prévu une poignée de préhension. On obtient ainsi une réalisation monobloc en même temps qu'aisément manipulable.

Pour ce qui est de la commande, la règle-support contient un passage axial pour des liaisons électriques de commande et de contrôle, chaque module contient des liaisons électriques correspondantes, et il est prévu entre ces liaisons un connecteur dont l'enfichage est réalisé en même temps que la mise en place du module.

La commande peut ainsi être rendue sélective de façon particulièrement simple, en associant une ligne électrique à chaque organe ou ensemble d'organes commandés. L'identification du type de module l'est également en associant au type de module une combinaison particulière de court-circuits entre certains conducteurs du connecteur côté module. Le dispositif de commande embarqué sur l'aéronef reconnaît alors immédiatement le type du module en présence.

De préférence, le code d'identification du module sera en relation avec le nombre d'organes commandés, de sorte que, quel que soit le type de module, les lignes électriques de commande prennent toujours les mêmes positions et soient utilisées dans un ordre préférentiel à partir de la ligne correspondant au rang maximal d'organes commandés.

Le dispositif selon l'invention est susceptible de nombreuses applications. La présente invention définit l'une d'entre elles : le module comprend une série de pots contenant chacun une charge éclairante solidaire d'une pyrotechnie de mise en œuvre et d'un parachute. L'éjection des pots est déclenchée par initiation pyrotechnique sur commande électrique.

Très avantageusement, les charges éclairantes des différents pots du même module sont assorties de retards pyrotechniques, d'une part associés à l'extraction du parachute, d'autre part à l'allumage des charges éclairantes. Ces retards sont échelonnés de sorte qu'après éjection en séquence des pots avec des vitesses adaptées, les charges éclairantes se retrouvent allumées quasi simultanément alors qu'elles seront sensiblement à la même altitude.

Plus particulièrement, les coupelles porte-charges sont évasées vers l'extérieur, et allumées par leur extrémité libre, à travers un canal axial, ce qui permet de maintenir un éclairement intense, sensiblement constant, sur une zone étendue, et ce pendant toute la durée de la combustion des charges éclairantes.

D'autres caractéristiques et avantages de l'invention apparaîtront à la lecture de la description détaillée qui va suivre, ainsi qu'à l'examen des dessins annexés, sur lesquels :

la figure 1   est en vue de dessous d'une règle-support selon l'invention, dans la version destinée à un aéronef ;

les figures 2, 3 et 4A   sont respectivement une vue en coupe B-B, une vue dessus, et une vue en coupe A-A du dispositif de la figure 1 ;

la figure 4B   est une vue en perspective montrant mieux la structure de l'un des éléments de préhension femelles incorporés à la règle-support des figures précédentes ;

la figure 5   est une vue latérale montrant la mise en place d'un module selon l'invention dans la règle-support déjà illustrée ;

les figures 6A et 6B   montrent mieux le dispositif de prise mâle incorporé au module de la figure 5 ;

la figure 7   est une vue de dessus du module de la figure 5 ;

les figures 7A à 7G   illustrent les éléments supérieurs de la came de verrouillage ;

les figures 8A et 8B   illustrent les positions dégagée et encastrée de la poignée de verrouillage ;

les figures 9   (agrandie en 9A) et 10 sont deux vues correspondantes illustrant le contenu d'un module selon l'invention sous forme d'une série de dispositifs à charge éclairante ; et

la   figure   11   montre   schématiquement comment l'on peut plaquer ou intégrer des modules selon l'invention sous ou dans l'aile ou le fuselage d'un aéronef.

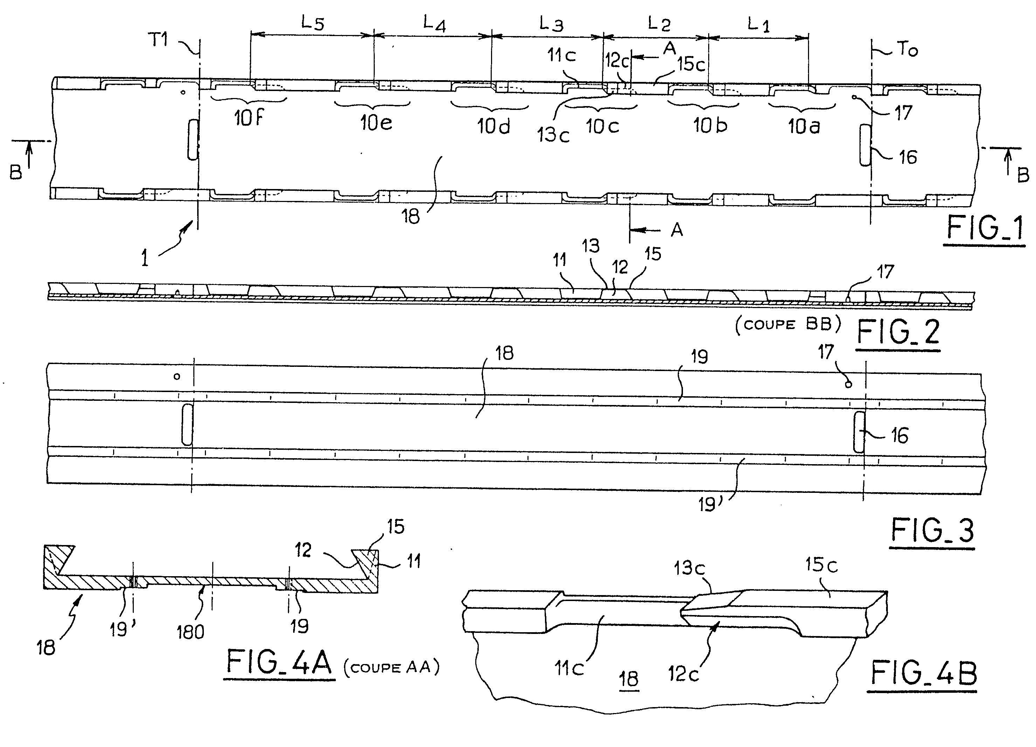

Sur la figure 1, un emplacement de module est défini entre les traits d'axe $T_0$ et $T_1$. La règle-support illustrée porte généralement la référence numérique 1. Cette règle-support est définie par un fond 18, muni de saillies latérales, qui définissent une pluralité de dispositifs de prise femelles 10a, 10b, 10c, 10d, 10e et 10f, sur les bords parallèles de la règle-support, de part et d'autre de celle-ci. Comme le montrent les figures 1, 2, 4A et 4B, ces organes de prise femelles sont du type queue d'aronde. Chaque organe de prise, 10c par exemple, comporte tout d'abord une échancrure 11c qui permettra le passage d'un organe de prise mâle homologue du module. A côté de l'échancrure 11c est placé un dispositif à queue d'aronde proprement dit, défini par un bord incliné 12c, dont la forme s'évase à 60° vers le fond 18 de la règle-support. Au-dessus, une rampe inclinée 13c est suivie d'une partie plane 15c, parallèle au fond de la règle-support. Comme on le verra plus loin, on assure ainsi qu'il y aura véritablement préhension avec serrage des organes mâles de queues d'aronde du module entre la face inclinée 12c et la rampe 13c.

A l'une de ces extrémités, l'emplacement de module comporte un orifice 16, qui traverse le fond 18 de la règle-support, et permet le passage de liaisons telles que les liaisons électriques de commande. Comme on le voit sur la figure 4A ainsi que sur la figure 3, le côté extérieur du fond 18 est muni d'un creux 180, qui permet précisément l'arrivée de ces connexions électriques jusqu'à chacun des orifices de traversée 16, un couvercle pouvant être fixé sur des méplats 19 et 19' de niveau intermédiaire, à l'aide de vis. Les connexions électriques sont avantageusement réalisées à l'aide de nappes de circuits imprimés souples, éventuellement double couche ; ainsi chaque nappe est associée à un module. Sur les figures 1 à 3, on voit en 17 un téton, qui est du côté de la règle-support l'organe servant à assurer le verrouillage du module par rapport à celle-ci.

Selon un aspect important de l'invention, les organes de prise femelles 10a à 10f sont écartés les uns des autres selon une progression géométrique le long de la règle-support. On a donc :

$$L5/L4 = L4/L3 = L3/L2 = L2/L1 = q$$

Dans un exemple particulier de réalisation, la demanderesse a choisi q = 1,056. D'une manière générale, on pourra choisir la raison q de la progression géométrique entre environ 1,01 et environ 1,1.

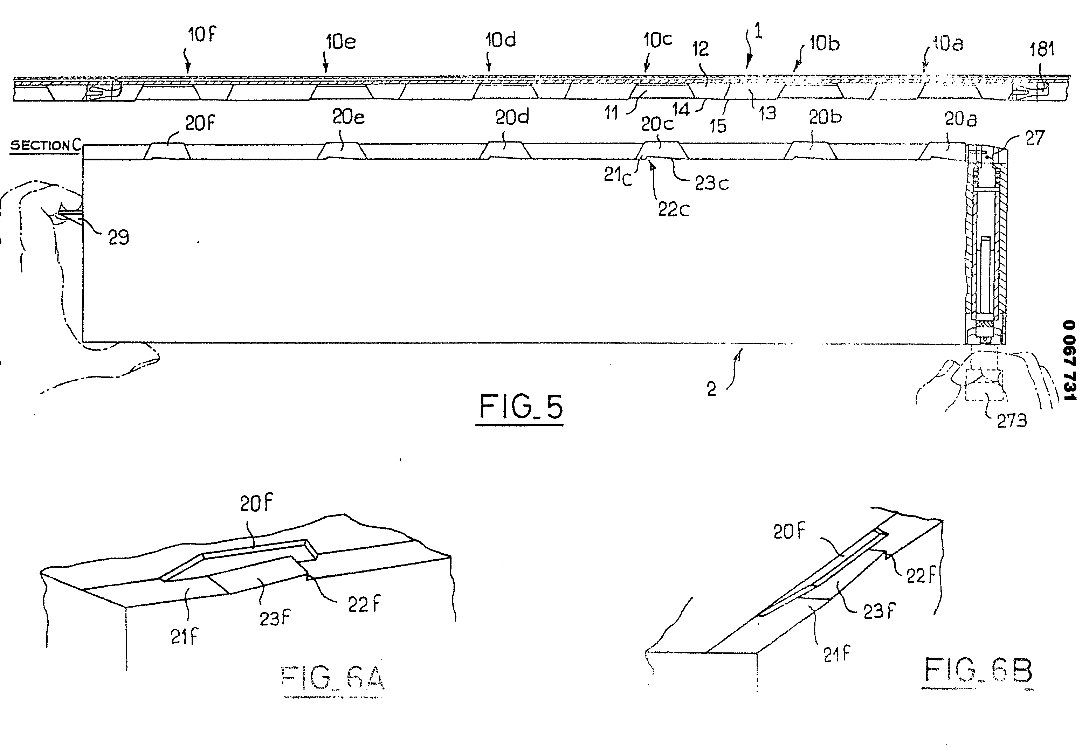

Sur la figure 5, on retrouve en partie haute l'élément de la règle-support déjà décrite. La partie basse de cette figure montre un module 2 selon la présente invention. Il apparaît que ce module comporte des organes de prise mâles 20a à 20f, qui sont eux aussi en forme de queues d'aronde, et écartés suivant la même progression géométrique que précédemment. La figure 5 montre également en partie droite un levier rotatif qui servira à assurer le verrouillage du module sur la règle-support, et en partie gauche une poignée fixe de préhension 29 qui, comme on le voit sur la figure 8A, vient se loger dans un évidement 290 du module adjacent. Cet évidement est naturellement pratiqué du côté du levier rotatif.

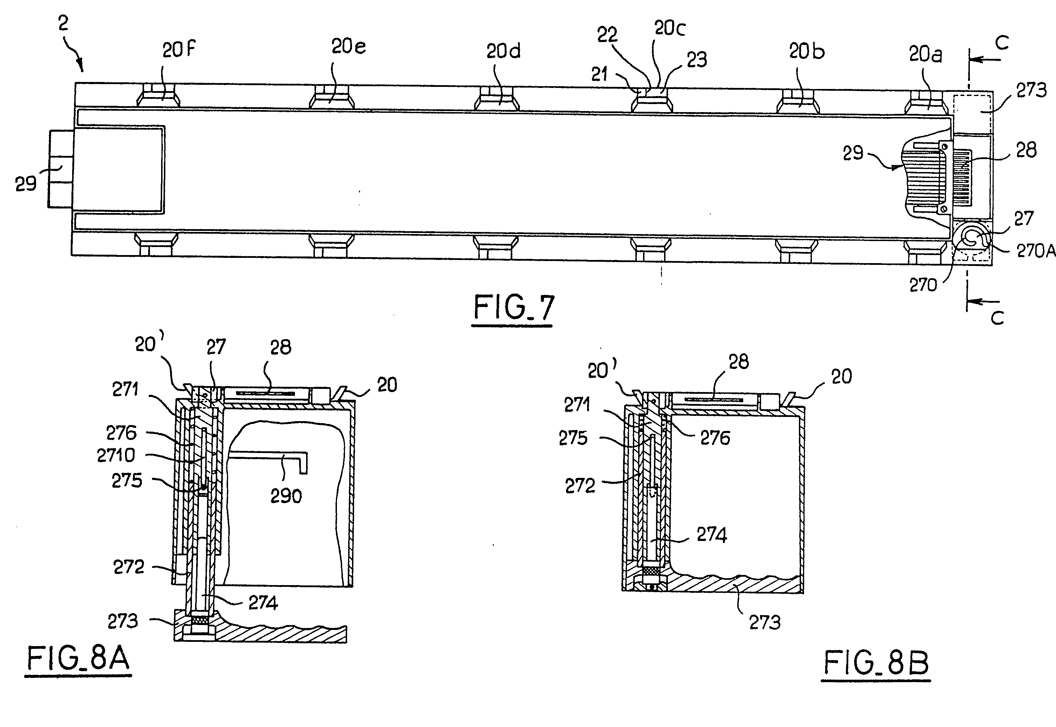

Les figures 6A et 6B montrent de manière plus détaillée l'un des organes de prises mâles. Cet organe est essentiellement constitué d'une lèvre 20f, inclinée de façon oblique à 60° vers la paroi extérieure du module, d'une manière correspondant à l'angle d'inclinaison des bords 12 de la règle-support. Cette lèvre est disposée sur la partie supérieure du module, qui est généralement plane. On observera cependant que sous chacune des lèvres telles que 20f, la paroi supérieure du module définit un plan incliné montant 23f, raccordé par l'intermédiaire d'un décrochement 22f au niveau normal 21f du dessus du module.

Les lèvres telles que 20f vont d'abord être engagées dans les échancrures telles que 11c de la règle-support (figure 4B). Par une translation vers la droite, la lèvre 20f vient alors s'engager sur le bord incliné 12c, tandis que le plan incliné 23f va monter sur la pente 13c. La lèvre 20f est alors sollicitée en torsion, ce qui assure une excellente solidarité du type queue d'aronde, avec rattrapage de jeu, entre les deux parties de l'assemblage. La présente invention préconise un dispositif qui assure en même temps, de manière réversible, le verrouillage et la fin du mouvement de translation qui vient d'être décrit.

Sur les figures 5, 7, 8A et 8B, on voit un galet 27, muni en partie supérieure d'un sillon spiral définissant un trajet de came 270 susceptible de coopérer avec le téton 17 déjà mentionné dans la règle-support. Le trajet de came 270 possède une entrée 270A qui est ouverte au téton 17 lorsqu'une poignée 273 (liée à la came) est en position angulaire déverrouillée.

La mise en place du module s'effectue comme suit :

— l'opérateur sort la poignée 273 (figure 8A), qu'il prend d'une main ; il prend de l'autre la poignée 29 ;

— il engage verticalement le module dans les évidements tels que 11c, (une seule position est possible pour chaque emplacement de module) ;

— il déplace horizontalement le module jusqu'à engager l'entrée de came 270A en butée sur le téton 17 ; le module est déjà en prise sur son support, mais avec jeu ;

— Il tourne enfin d'un tour la poignée 273 ; la came 270 et le téton 17 interagissent pour déplacer le module vers la droite, et réaliser le verrouillage sans jeu déjà décrit. La poignée 273 peut alors rentrer dans son logement (figure 8B).

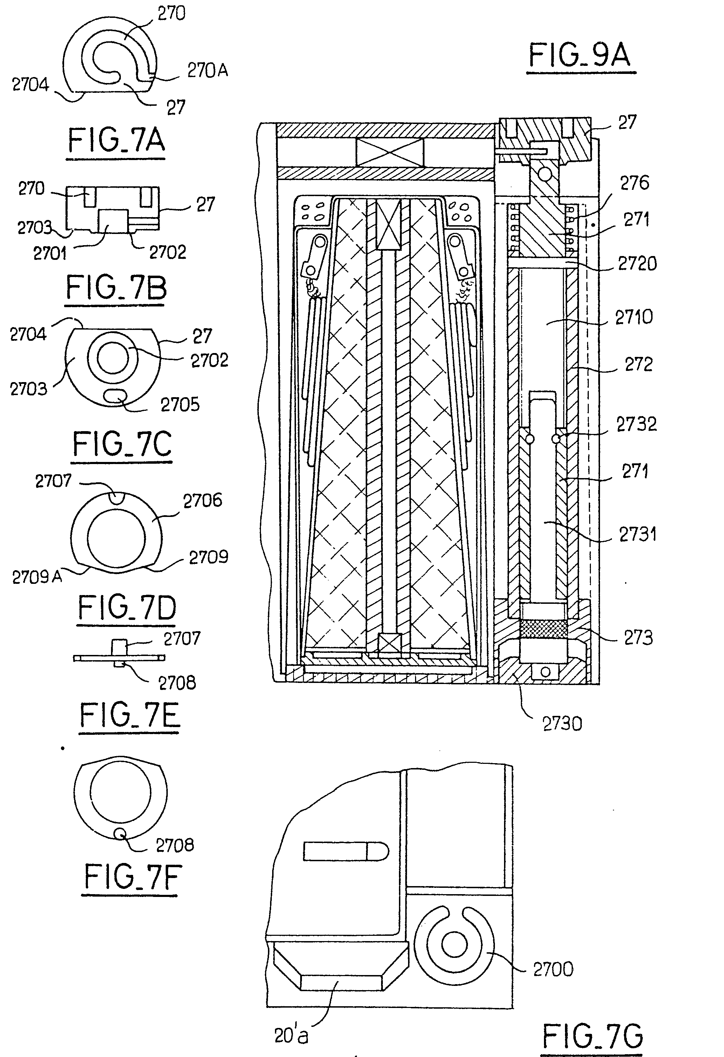

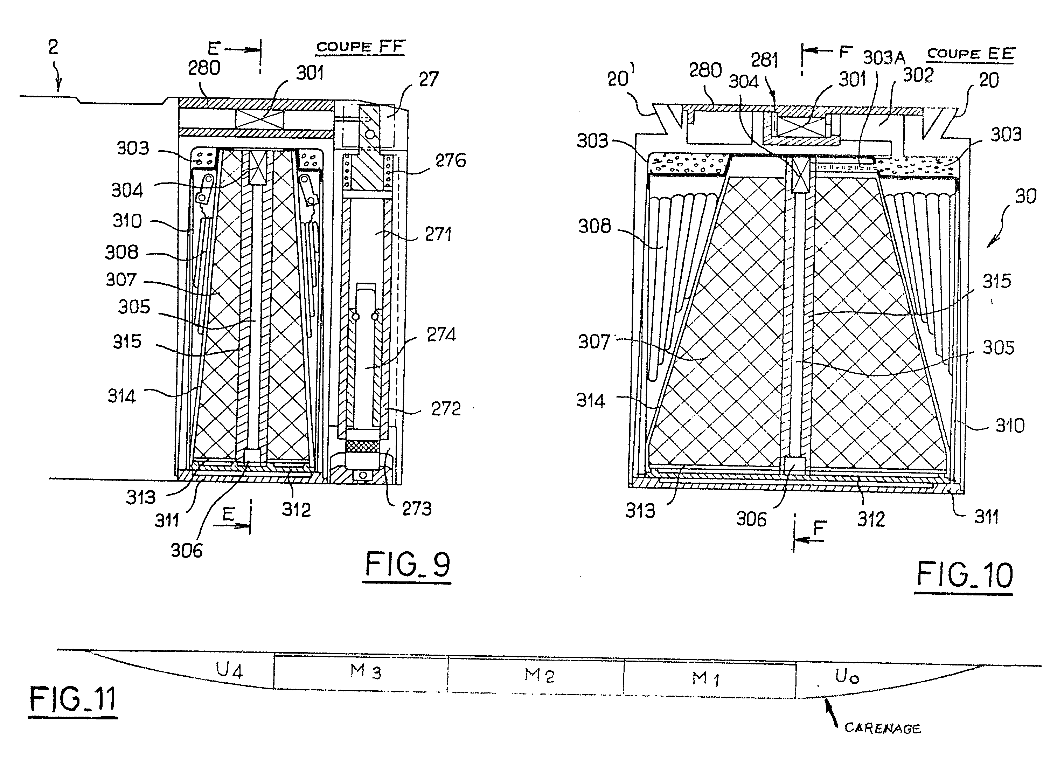

On décrira maintenant plus en détail la structure du système de levier, en référence aux figures 7A à 7G et 9A.

La figure 7A illustre le galet 27 en vue de dessus, avec le profil de came 270 et son entrée 270A, ainsi qu'un méplat latéral 2704. En coupe (figure 7B), le même galet porte de l'autre côté un alésage borgne 2701, entouré d'un épaulement annulaire 2702, lui-même entouré d'un plateau en couronne 2703. La vue de dessous (figure 7C) montre que le même galet porte, à l'opposé du méplat 2704, une rainure 2705 qui parcourt un angle limité d'un segment d'anneau.

Sur l'épaulement 2702 vient se placer à rotation une rondelle 2706, équipée d'un côté d'un téton 2707 entrant dans la rainure 2705, et de l'autre d'un second téton 2708 venant s'engager dans une rainure complémentaire 2700 ménagée dans le corps du module (figure 7G). La rondelle 2706 porte en outre deux méplats 2709 et 2709A écartés de l'angle de la rainure 2705.

Dans l'épaulement 2701 du galet 27 vient se claveter la tête d'un arbre d'actionnement 271, muni plus bas d'un perçage traversant radial 2710, où peut coulisser une tige 2720, solidaire d'un tube 272, lui-même fixé à la poignée 273. Ce coulissement s'effectue sous l'effet d'un rappel élastique 276, tandis que l'autre extrémité de l'arbre 271, alésée axialement, loge une broche à billes 2731, actionnée par un bouton-poussoir 2730 incorporé à la poignée 273.

Des logements sont prévus pour les billes telles que 2732 dans l'arbre 271 afin de maintenir la poignée encastrée dans le module, sous un angle prédéterminé.

Bien que la poignée tourne de 360° pour l'actionnement, les pièces 27 et 2706 définissent deux butées franches entre deux positions :

— l'une pour laquelle l'entrée de came 270A vient en face du téton 17 de la règle-support ;

— l'autre pour laquelle le téton 17 est en prise de verrouillage sur la came 270.

On notera que la forme de la came 270 permet d'appliquer un couple croissant pour l'engagement des lèvres 20 sur les profils femelles de queue d'aronde 12. Une certaine déformation des lèvres 20 va se produire lorsque la poignée est revenue dans son logement en position de verrouillage.

Sur la figure 7, on voit un élément de connecteur 28, associé à des connexions 29 ménagées du côté du module 2. Un élément de connecteur correspondant est monté flottant du côté de la règle-support, comme cela est illustré schématiquement en 181 sur la figure 5. L'enfichage des deux éléments de connecteur l'un sur l'autre est naturellement réalisé de la même manière et simultanément à la fixation, par la translation produite au moment de celle-ci.

On décrira maintenant une application de l'invention en référence aux figures 9 et 10. On reconnaît sur la figure 9 la partie droite du module, tel qu'il est illustré sur la figure 5. Juste à côté du dispositif de verrouillage articulé autour du galet 27 et de la poignée 273, on voit le premier d'une série de pots 310 de charge éclairante 307. Ces pots sont de structure générale rectangulaire, dont le grand côté est en largeur dans le module. Le pot 310 est fermé par un couvercle 311. Chaque pot 310 contient une coupelle 314 enfermant la charge 307 sous un autre couvercle 312. Enfin la charge éclairante 307 est munie du côté ouvert de la coupelle conique 314 d'une charge d'allumage.

On observera également que le pot éclairant contient un parachute 308 solidaire de la coupelle 314. Des liaisons électriques telles que 281, partant du connecteur 28 déjà cité, viennent sélectivement vers l'initiateur 301 de chacun des projectiles. Cet initiateur 301 est solidaire d'un dispositif de relais 302, monté transversalement, et qui vient actionner une charge de dépotement 303 en couronne, suivie d'un retard 303A vers la charge 304 qui éjecte le pot 310 et libère le parachute 308, lequel freine alors la descente de la coupelle 314.

Ensuite, la charge 304 excite un retard pyrotechnique 305, confiné dans une tubulure axiale 315. Le feu aboutit à une pastille relais 306, laquelle allumera la charge d'allumage 313, puis la charge utile 307.

La conception modulaire de la présente invention offre des avantages intéressants, qui se manifestent notamment avec une telle charge éclairante : en effet, en donnant aux charges éclairantes 307 des différents pots placés dans un même module des retards pyrotechniques échelonnés, choisis en fonction d'une éjection en séquence préétablie, pour une vitesse donnée d'un aéronef, on peut réaliser très simplement l'allumage quasi simultané des différents projectiles d'un même module (ou de plusieurs modules), ce qui réalise alors un éclairement soudain et intense sur une zone très étendue.

Selon un autre aspect de l'invention, les charges illustrées sur les figures 9 et 10 comportent des coupelles 314 évasées vers l'extérieur, et allumées par leur extrémité libre, ce qui tend à maintenir l'éclairement constant au cours de la descente du parachute.

La figure 11 illustre comment on peut mettre différents modules selon la présente invention sous l'aide d'un avion. La grande ligne horizontale représente le bord inférieur de l'aile, munie ici de trois modules selon l'invention, avec leur règle-support, entre deux carénages $U_0$ et $U_4$, profilés de manière convenable. Ces carénages peuvent servir à contenir le ou les boîtiers de commande et contrôle électronique, relié aux liaisons électriques déjà mentionnées dans la règle-support.

Il est très simple de réaliser dans chaque module des interconnexions préétablies au niveau du connecteur 28, interconnections qui représentent de façon non équivoque le type de module en présence. L'unité de commande $U_4$ peut alors très aisément reconnaître la charge de module dont elle se trouve équipée d'aéronefs, un par un, et actionner de la manière voulue le module adéquat à tout moment, quelle que soit la place de celui-ci.

Selon un autre aspect de l'invention, les modules, et éventuellement leur règle-support, peuvent être réalisés intégralement en matière non métallique, par exemple sous la forme de résines synthétiques de haute qualité, telles que celles qui sont connues sous les noms de PPS, ou polysulfone, ou polyuréthane chargé de fibres de verre et/ou de carbone.

**Revendications**

1. Dispositif de fixation pour au moins un module embarqué, tel qu'un module standard lanceur d'engins pour aéronefs, du type comportant une pluralité d'organes de prise mâles (20) répartis sur une paroi rectiligne de module (2) et une règle-support (1) à fixer sur l'aéronef, munie de moyens de prise femelles (10) homologues, caractérisé par le fait que les moyens de prise femelles (10) comportent une pluralité d'organes de prise femelles (10) répartis le long de la règle-support (1) et coopérant à la façon de queues d'arondes avec les organes de prise mâles (20), la règle-support (1) contenant des échancrures (11) d'introduction des organes de prise mâles (1) adjacentes à ses moyens de prise femelles (10), et en ce que, pour chaque emplacement de module, les organes de prise femelles (10) et mâles (20) sont écartés les uns des autres selon une même progression géométrique le long de la règle-support (1) et de la paroi rectiligne du module (2).

2. Dispositif selon la revendication 1, caractérisé par le fait qu'il est prévu un moyen mécanique réversible (17, 27) propre à assurer une translation relative entre la règle-support et le module, entre une position d'introduction et une position de verrouillage.

3. Dispositif selon la revendication 2, caractérisé par le fait que le moyen mécanique comprend un levier rotatif (273) à came spirale (27) incorporé au module (2), ainsi qu'un téton (17) solidaire à la règle-support (1) en position prédéterminée, et propre à coopérer avec la came (27) pour assurer ladite translation.

4. Dispositif selon la revendication 3, caractérisé par le fait que le levier (273) est escamotable dans le module, la position d'escamotage correspondant au verrouillage.

5. Dispositif selon la revendication 4, caractérisé par le fait que le levier (273) est mécaniquement relié à la came (27) par une connexion permettant deux butées franches sur 360°.

6. Dispositif selon l'une des revendications 1 à 5, caractérisé par le fait que la règle-support (1) contient un passage axial (18, 19) pour des liaisons électriques de commande, que chaque module (2) contient des liaisons électriques de commande (29), et qu'il est prévu entre ces liaisons un connecteur (28) dont l'enfichage est réalisé en même temps que la mise en place du module.

7. Dispositif selon la revendication 6, caractérisé par le fait qu'une partie des liaisons électriques, côté module, comporte des interconnexions représentatives du type et du nombre de munitions emportées dans le module, et qu'une autre partie des liaisons électriques est affectée avec un rang prédéterminé à l'excitation d'un nombre maximal de charges emportées, moyennant quoi les ordres d'excitation venant de l'extérieur sont exécutés à coup sûr, quel que soit le nombre de munitions emportées par le module.

8. Dispositif selon l'une des revendications précédentes, caractérisé par le fait que le module comprend une série de pots (310) de charge éclairante (307) équipés chacun d'un parachute (308), et éjectables par initiation pyrotechnique (301, 302, 303) sur commande électrique.

9. Dispositif selon la revendication 8, caractérisé par le fait que les charges éclairantes (307) des différents pots du même module sont assorties de retards pyrotechniques d'extraction du parachute d'une part et d'allumage de l'éclairant d'autre part, échelonnés (305), ce qui permet de les éjecter en séquence, tout en les allumant quasi simultanément, sensiblement à la même altitude.

10. Dispositif selon l'une des revendications 8 et 9, caractérisé par le fait que les pots (310) contiennent des coupelles (314) évasées vers l'extérieur, et allumées par leur extrémité libre à travers un canal axial (315), ce qui permet un éclairement au cours de la descente sous parachute.

**Claims**

1. A device for affixing at least one on-board unit, such as a standard launcher unit for aircraft, of the type having a plurality of male gripping members (20) distributed on a straight wall of the unit (2) and a rack (1) to be fixed onto the aircraft, provided with female gripping means (10), characterized by the fact that the female gripping means (10) has a plurality of female gripping members (10) distributed along the length of the rack (1) and cooperating in the manner of dovetails with the male gripping members (20), the rack (1) including notches (11) for introducing the male gripping members (20) adjacent their female gripping means (10), and in that, for each position of a unit, the female (10) and male (20) gripping members are spaced one from another according to the same geometric progression along the length of the rack (1) and of the straight wall of the unit (2).

2. A device according to claim 1, characterized by the fact that there is provided reversible mechanical means (17, 27) adapted to ensure a relative translation between the rack and the unit, between an introduction position and a locking position.

3. A device according to claim 2, characterized by the fact that the mechanical means comprises a rotary lever (273) with a spiral cam (27) incorporated on the unit (2), as well as a point (17) rigid in the rack (1) in a predetermined position, and adapted to cooperate with the cam (27) for assuring the said translation.

4. A device according to claim 3, characterized by the fact that the lever (273) is retractable in the unit, the retraction position corresponding to locking.

5. A device according to claim 4, characterized by the fact that the lever (273) is mechanically connected to the cam (27) by a connection permitting two free abutments in 360°.

6. A device according to any one of claims 1 to 5, characterized by the fact that the rack (1) includes an axial passage (18, 19) for electric control connections, that each unit (2) includes electric control connections (29), and that there is provided between these connections a connector whose engagement is effected at the same time as the positioning of the unit.

7. A device according to claim 6, characterized by the fact that one part of the electric connections, on the unit side, has interconnections representative of the type and number of munitions carried in the module, and that an other part of the electric connections is assigned with a predetermined order to the firing of the maximum number of charges carried, as a result of which firing orders from outside are definitely carried out, whatever the number of munitions carried by the unit.

8. A device according to any one of the preceding claims, characterized by the fact that the unit comprises a series of chambers (310) having flare charges (307) each equipped with a parachute (308), and ejectable pyrotechnically (301, 302, 303) under electric control.

9. A device according to claim 8, characterized by the fact that the flare charges (307) of different chambers of the same unit are matched with staggered pyrotechnics delays for parachute launching on the one hand and flare lighting on the other hand, which permits their ejection in sequence and their lighting substantially simultaneously at the same height.

10. A device according to either of claims 8 and 9, characterized by the fact that the chambers (310) include cupels (314) flaring towards the outside, and lit at their free end via an axial channel (315), which permits flaring during descent under parachute.

**Patentansprüche**

1. Befestigungsvorrichtung für mindestens einen Verlademodul, etwa einem Norm-Raketen-Trägermodul für Luftfahrzeuge, mit einer Anzahl von männlichen Anschlußorganen (20), die auf einer geraden Wand des Moduls (2) verteilt sind, sowie mit einem am Luftfahrzeug zu befestigenden Halteschieber (1), wobei der Halteschieber mit gleichartigen weiblichen Anschlußvorrichtungen (10) ausgestattet ist, dadurch gekennzeichnet, daß die weiblichen Anschlußvorrichtungen (10) eine Anzahl von weiblichen Anschlußorganen aufweisen, die sich längs des Halteschiebers (1) erstrecken und schwalbenschwanzartig mit den männlichen Anschlußorganen (20) zusammenwirken, daß der Halteschieber (1) Ausnehmungen (11) zur Einführung der männlichen Anschlußorgane benachbart zu seinen weiblichen Anschlußvorrichtungen aufweist, und daß bei jeder Lage des Moduls die weiblichen und die männlichen (20) Anschlußorgane in einer gleichen geometrischen Folge entlang des Halteschiebers (1) und der geradlinigen Wand (2) des Moduls voneinander getrennt sind.

2. Vorrichtung nach Anspruch 1, dadurch gekennzeichnet, daß eine reversible mechanische Einrichtung (17, 27) vorgesehen ist, um eine relative Verschiebung zwischen dem Halteschieber und dem Modul zwischen einer Einschubstellung und einer Verriegelungsstellung zu ermöglichen.

3. Vorrichtung nach Anspruch 2, dadurch gekennzeichnet, daß die mechanische Einrichtung (17, 27) einen Drehhebel (273) mit einer im Modul (2) eingebauten Spiralnocke (27) sowie eine Spitze (17) aufweist, die in einer vorbestimmten Lage feststehend am Halteschieber angeordnet ist und für ein Zusammenwirken mit der Spiralnocke (27) geeignet ist, um die Verschiebung zu ermöglichen.

4. Vorrichtung nach Anspruch 3, dadurch gekennzeichnet, daß der Drehhebel (273) in dem Modul (2) einziehbar ist, wobei die Einziehlage der Verriegelungsstellung entspricht.

5. Vorrichtung nach Anspruch 4, dadurch gekennzeichnet, daß der Drehhebel (273) mit der Nocke (27) mechanisch durch eine Verbindung verbunden ist, die zwei um 360° gekrümmte freie Anschläge gestattet.

6. Vorrichtung nach einem der Ansprüche 1 bis 5, dadurch gekennzeichnet, daß der Halteschieber (1) einen axialen Durchlaß (18, 19) für elektrische Steuerverbindungen aufweist, daß jeder Modul (2) elektrische Steuerverbindungen (29) aufweist, und daß zwischen diesen Verbindungen ein Stecker (28) vorgesehen ist, welcher gleichzeitig mit der Befestigung des Moduls angeschlossen wird.

7. Vorrichtung nach Anspruch 6, dadurch gekennzeichnet, daß ein Teil der elektrischen Verbindungen auf der Seite des Moduls der Art und der Anzahl der vom Modul getragenen Munition entsprechende Zwischenverbindungen aufweist und daß ein anderer Teil der elektrischen Verbindungen mit einem vorbestimmten Rang für die Zündung einer größtmöglichen Anzahl mitgenommener Ladungen benutzt wird, wodurch die von außen kommenden Zündbefehle mit größter Sicherheit ausgeführt werden, wie groß auch immer die Anzahl der vom Modul getragenen Munition ist.

8. Vorrichtung nach einem der vorhergehenden Ansprüche, dadurch gekennzeichnet, daß der Modul eine Reihe von Töpfen (310) für Leuchtladungen (307) aufweist, von denen jeder mit einem Fallschirm (308) versehen ist, wobei die Töpfe auf elektrischen Befehl über eine pyrotechnische Einrichtung (301, 302, 303) ausgeworfen werden können.

9. Vorrichtung nach Anspruch 8, dadurch gekennzeichnet, daß die Leuchtladungen der einzelnen Töpfe eines Moduls mit abgestuften (305) pyrotechnischen Verzögerungsmitteln einerseits für die Fallschirme und andererseits für die Zündung des Leuchtstoffs versehen sind, wodurch ein aufeinanderfolgender Auswurf ermöglicht wird, wobei alle Töpfe annähernd gleichzeitig in gleicher Höhe gezündet werden.

10. Vorrichtung nach einem der Ansprüche 8 und 9, dadurch gekennzeichnet, daß die Töpfe (310) sich nach außen ausweitende Zuschnitte (314) aufweisen und an ihrem freien Ende durch einen axialen Kanal (315) gezündet werden, wodurch ein Leuchten während des Abwurfes unter dem Fallschirm ermöglicht wird.

L5  L4  L3  L2  L1

T1

11c  12c  A  15c  To

10f  10e  10d  13c 10c  10b  10a  17

16

B  B

1  18  A

FIG_1

11  13  12  15  17

(COUPE BB)  FIG_2

18  19  17

16

19'  FIG_3

15  13c  15c

12  11

18  19'  180  19  11c  18  12c

FIG_4A (COUPE AA)  FIG_4B

0 067 731

FIG_5

FIG_6A

FIG_6B

0 067 731

FIG.7

FIG.8A

FIG.8B

3

270

2704 270A

27

FIG_7A

270 27

2703

2701 2702

FIG_7B

2704 27

2702

2703

2705

FIG_7C

2707 2706

2709

2709 A

FIG_7D

2707

2708

FIG_7E

2708

FIG_7F

FIG_9A

27

276

271

2720

2710

272

2732

271

2731

273

2730

20'a

2700

FIG_7G

4

COUPE FF

**FIG_9**

COUPE EE

0 067 731

**FIG_10**

**FIG_11**

| U4 | M3 | M2 | M1 | U0 |

CARENAGE